# EUROPEAN PATENT APPLICATION

(11) **EP 4 745 176 A1**
(43) Date of publication of application: **20.05.2026**
(21) Application number: 23945178.4
(22) Date of filing: 04.10.2023
(51) Int. Cl.: C08G 59/08, C08G 59/50, C08J 5/04

(54) **EPOXY RESIN, CURABLE RESIN COMPOSITION, CURED PRODUCTS THEREOF, AND CARBON FIBER-REINFORCED COMPOSITE MATERIAL**

(30) Priority: 11.07.2023 JP 2023113998
(71) Applicant: Nippon Kayaku Kabushiki Kaisha, Tokyo 100-0005 (JP)
(72) Inventor: IMAI, Takashi, Tokyo 115-8588 (JP); NAKANISHI, Masataka, Tokyo 115-8588 (JP); TERADA, Kiwamu, Tokyo 115-8588 (JP); YARITA, Masato, Tokyo 115-8588 (JP)
(74) Representative: Gille Hrabal Partnerschaftsgesellschaft mbB Patentanwälte
(86) International application number: PCT/JP2023/036254
(87) International publication number: WO 2025/013308

(57) **Abstract**

The present invention provides an epoxy resin exhibiting excellent heat resistance and bend strength, a curable resin composition, cured products thereof, and a carbon fiber-reinforced composite material. The epoxy resin is represented by general formula (1) and has an epoxy equivalent of 210-218 g/eq. (In formula (1), n is the average number of repetitions, and denotes a real number within the range 1<n<15.)

## Description

### TECHNICAL FIELD

The present invention relates to an epoxy resin, a curable resin composition, a cured product thereof, and a carbon fiber-reinforced composite material.

### BACKGROUND ART

By curing epoxy resins with various curing agents, epoxy resins become cured products with excellent mechanical properties, water resistance, chemical resistance, heat resistance, electrical properties, etc., and epoxy resins are used in a wide range of fields such as adhesives, paints, laminates, molding materials, and casting materials. Carbon fiber-reinforced composite materials (CFRPs) made by impregnating reinforcement fibers with epoxy resins and curing agents as matrix resins and curing the epoxy resins can be given properties such as light weight and high strength, and therefore have been widely deployed in recent years in aircraft structural members, wind turbine blades, automobile exterior panels, and computer applications such as IC trays and notebook computer housings, and demand for CFRP is increasing. In particular, epoxy resins are used as matrix resins for aircraft applications, taking advantage of the light weight and high strength properties of the molded bodies thereof.

Thermosetting resin cured products such as epoxy resins used as resins in matrix resins of CFRP and the like are generally brittle, and require high mechanical strength when applied to structural materials for aerospace and vehicles, etc. To compensate for the low flexural strength, toughness, adhesiveness, etc. of this thermosetting resin, a method of adding a highly tough thermoplastic resin to the thermosetting resin matrix is widely known (Patent Literatures 1 to 3). Specifically, the flexural strength and toughness of the prepreg are improved by combining particles of thermoplastic resins such as polyethersulfone, polyetherimide, and polyamide with the thermosetting resin matrix.

In recent years, the required properties of CFRP have become stricter, and when used for a structural material of aerospace applications or vehicles, etc., heat resistance of 180 °C or more and flexural strength of 100 MPa or more are required (Patent Literatures 4 and 5).

### CITATION LIST

### PATENT LITERATURES

Patent Literature 1: Japanese Patent Application Publication No. S60-243113
Patent Literature 2: Japanese Patent Application Publication No. H09-100358
Patent Literature 3: Japanese Patent Application Publication No. 2013-155330
Patent Literature 4: Japanese Patent Application Publication No. 2010-275492
Patent Literature 5: International Publication No. 2019-021879
Patent Literature 6: Japanese Patent Application Publication No. 2007-211254

### SUMMARY OF INVENTION

### TECHNICAL PROBLEM

A low water-absorbent epoxy resin is described in Patent Literature 6. However, the epoxy resin described in Patent Literature 6 has low flexural strength and is brittle (has low elongation), making it difficult to use it for a CFRP material.

The present invention has been made in view of the above circumstances, and an object of the present invention is to provide an epoxy resin, a curable resin composition, and a cured product thereof, and a carbon fiber-reinforced composite material, which are excellent in heat resistance and flexural strength.

### SOLUTION TO PROBLEM

That is, the present invention relates to the following [1] to [5]. In the present invention, "(Numerical value 1) to (Numerical value 2)" indicates that the upper and lower limits are included.
[1] An epoxy resin represented by the following formula (1) and having an epoxy equivalent of 210 g/eq. or more and 218 g/eq. or less. 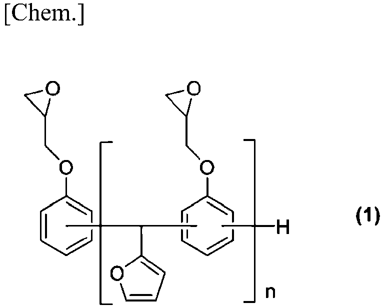 (In formula (1), n is the average number of repetitions and is a real number in the range of 1<n<15.)
[2] A curable resin composition containing the epoxy resin described in the preceding item [1] and a curing agent.
[3] The curable resin composition described in the preceding item [2], wherein the curing agent is an amine-based curing agent.
[4] A cured product obtained by curing the curable resin composition described in the preceding item [2] or [3].
[5] A carbon fiber-reinforced composite material comprising a cured product obtained by curing the curable resin composition described in the preceding item [2] or [3] and carbon fibers.

### ADVANTAGEOUS EFFECTS OF INVENTION

According to the present invention, it is possible to provide an epoxy resin, a curable resin composition, the cured product of which has excellent heat resistance and flexural strength, and a cured product thereof, and a carbon fiber-reinforced composite material.

### DESCRIPTION OF EMBODIMENTS

Hereinafter, an embodiment of the present invention (hereinafter, also referred to as "the present embodiment") will be described in further detail.

The epoxy resin of the present embodiment is represented by the following formula (1), and the epoxy equivalent is preferably 210 g/eq. or more and 218 g/eq. or less, more preferably 211 g/eq. or more and 218 g/eq. or less, and even more preferably 213 g/eq. or more and 218 g/eq. or less. When the epoxy equivalent is 210 g/eq. or more, the heat resistance is good, and when it is 218 g/eq. or less, the flexural strength is good. That is, when the epoxy equivalent is 210 g/eq. or more and 218 g/eq. or less, the heat resistance and flexural strength properties can be compatible. 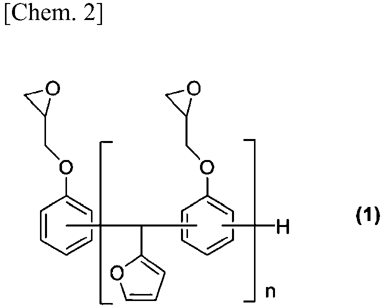 (In formula (1), n is the average number of repetitions and is a real number in the range of 1<n<15.)

In the formula (1), the value of n can be calculated from the number average molecular weight of the epoxy resin measured by gel permeation chromatography (GPC, detector: RI) or the area ratio of each of the separated peaks. n is preferably a real number of 1<n<15, more preferably 1<n<10, and particularly preferably 1<n<5.

The epoxy resin of the present embodiment can provide a cured product with excellent heat resistance and flexural strength by controlling the epoxy equivalent. The flexural strength is preferably 100 to 130 MPa, more preferably 105 to 125 MPa, and even more preferably 110 to 120 MPa. If the flexural strength is less than 100 MPa, the flexural strength of the resulting carbon fiber-reinforced composite material is insufficient, which leads to reduced reliability, and is therefore undesirable. The flexural strength of the present embodiment is measured by the method described in the Examples below.

In addition, it is particularly preferable that the cured product obtained from the epoxy resin of the present embodiment has a maximum flexural strain of 5% or more. The maximum value does not need to be particularly limited, but a preferable maximum value is 7% or less. By having a maximum flexural strain of 5% or more, the brittleness of the cured product can be alleviated, resulting in a tough cured product.

The glass transition point (Tg) of the epoxy resin of the present embodiment is preferably 180 to 300°C, more preferably 185 to 250°C, even more preferably 190 to 200°C, and particularly preferably 220 to 250°C. If the glass transition point is less than 180°C, it is difficult to apply the resin to components that require heat resistance, such as those around an aircraft engine, and the resin softens during use, significantly reducing the mechanical strength, which is undesirable as it can lead to damage to the material. In addition, the glass transition point of an epoxy resin generally correlates with the crosslink density, and the higher the crosslink density, the higher the glass transition point. In other words, if the glass transition point exceeds 300°C, the crosslink density increases and the cured product becomes brittle, which is undesirable. The glass transition point (Tg) of the present embodiment is measured by the method described in the Examples below.

The epoxy resin represented by the formula (1) can be obtained by reacting a phenolic resin represented by the following formula (2) with epihalohydrin. 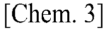 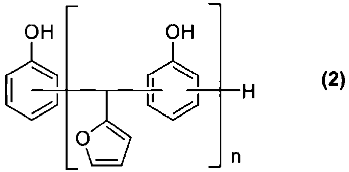 (In formula (2), n is the average number of repetitions and is a real number in the range of 1<n<15.)

The preferred range of n in the formula (2) is the same as that in the formula (1).

The epihalohydrin is readily available on the market. The amount of epihalohydrin used is preferably 2.0 to 10 mol, more preferably 3.0 to 8.0 mol, and even more preferably 3.5 to 6.0 mol, per mol of hydroxy groups in the raw material phenol mixture. Preferred examples of epihalohydrin that can be used in the present embodiment include epichlorohydrin, α-methylepichlorohydrin, β-methylepichlorohydrin, epibromohydrin, and the like, and epichlorohydrin, which is easily available industrially, is particularly preferred.

In the above reaction, an alkali metal hydroxide can be used as a catalyst for accelerating the epoxidation step. Examples of alkali metal hydroxides that can be used include sodium hydroxide and potassium hydroxide. A solid alkali metal hydroxide may be used, or an aqueous solution of an alkali metal hydroxide may be used. In the present embodiment, it is particularly preferable to use a solid alkali metal hydroxide formed into a flake shape in terms of solubility and handling. The amount of the alkali metal hydroxide used is preferably 0.90 to 1.5 mol, more preferably 0.95 to 1.25 mol, and even more preferably 0.99 to 1.15 mol, per mol of hydroxy groups in the raw material phenol mixture.

In order to promote the reaction, a quaternary ammonium salt such as tetramethylammonium chloride, tetramethylammonium bromide, trimethylbenzylammonium chloride, etc. may be added as a catalyst. The amount of the quaternary ammonium salt used is preferably 0.1 to 15 g, more preferably 0.2 to 10 g, per mole of hydroxy groups in the raw material phenol mixture.

The reaction temperature is preferably 30 to 90 °C, more preferably 35 to 80 °C. In particular, in the present embodiment, for higher purity epoxidation, a temperature of 50 °C or higher is preferred, and particularly 60 °C or higher is preferred. The reaction time is preferably 0.5 to 10 hours, more preferably 1 to 8 hours, and particularly preferably 1 to 3 hours. If the reaction time is too short, the reaction will not proceed to completion, and if the reaction time is too long, by-products will be produced, which is undesirable.

The reaction product of these epoxidation reactions is washed with water or heated under reduced pressure to remove epihalohydrin and solvents. Furthermore, in order to obtain an epoxy resin with a smaller amount of hydrolyzable halogen compounds, the recovered epoxy resin can be dissolved in a ketone compound having 4 to 7 carbon atoms (e.g., methyl isobutyl ketone, methyl ethyl ketone, cyclopentanone, cyclohexanone, etc.) as a solvent, and an aqueous solution of an alkali metal hydroxide such as sodium hydroxide or potassium hydroxide is added to carry out the reaction to ensure ring closure. In this case, the amount of the alkali metal hydroxide used is preferably 0.01 to 0.3 mol, preferably 0.05 to 0.2 mol, per mol of hydroxy groups in the raw material phenol mixture used in the epoxidation. The reaction temperature is preferably 50 to 120 °C, and the reaction time is more preferably 0.5 to 2 hours.

After the reaction is completed, the salt formed is removed by filtration, washing with water, or the like, and the solvent is then distilled off under heating and reduced pressure to obtain the epoxy resin of the present embodiment.

In the synthesis method of the phenolic resin represented by the formula (2) above, when furfural is reacted (condensed) with a phenol, the amount of the phenol is preferably 1.5 to 20 moles, particularly preferably 3 to 10 moles, per mole of furfural.

Examples of the phenols include disubstituted phenols such as catechol, resorcinol, and hydroquinone, and monosubstituted phenols such as phenol, cresol, and xylenol. These may be used alone or in combination of two or more kinds.

Examples of the solvent include, but are not limited to, methanol, ethanol, propanol, isopropanol, toluene, xylene, etc., and these may be used alone or in combination of two or more. When a solvent is used, the amount of the solvent used is preferably 5 to 500 parts by weight, more preferably 10 to 300 parts by weight, based on 100 parts by weight of phenol.

In the condensation reaction of furfural and phenols, it is preferable to use a base catalyst. Although condensation polymerization is possible with an acid catalyst, the reaction between furfurals also occurs, resulting in a large amount of by-products. There is also a method of using an organometallic compound as a catalyst, but this is disadvantageous in terms of cost. Specific examples of basic catalysts include: alkali metal hydroxides such as lithium hydroxide, sodium hydroxide, and potassium hydroxide; alkaline earth metal hydroxides such as magnesium hydroxide and calcium hydroxide; alkali metal alkoxides such as sodium methoxide, sodium ethoxide, potassium methoxide, potassium ethoxide, and potassium-tert-butoxide; and alkaline earth metal alkoxides such as magnesium methoxide and magnesium ethoxide, but the present invention is not limited to these, and the catalyst may be used alone or in combination of two or more kinds. The amount of catalyst used is preferably 0.005 to 2.0 times the moles, more preferably 0.01 to 1.1 times the moles, per mole of phenol.

The condensation reaction in the presence of these base catalysts is preferably carried out in the range of 40 to 180 °C, particularly preferably in the range of 80 to 165 °C The time for the condensation reaction can be selected in the range of 0.5 to 10 hours. The reaction product thus obtained is neutralized or repeatedly washed with water in the presence of a solvent so that the system becomes neutral, and then the water is separated and drained, and the solvent and unreacted materials are removed under heating and reduced pressure to obtain the phenolic resin represented by the formula (2).

The curable resin composition of the present embodiment contains a curing agent. Examples of the curing agent that can be used include an amine-based curing agent, an acid anhydride-based curing agent, an amide-based curing agent, and a phenol-based curing agent.

In the curable resin composition of the present embodiment, an amine-based curing agent is preferred, since it is possible to achieve a good balance between the resin viscosity of the curable resin composition and the heat resistance of the cured resin. Examples of amine-based curing agents include 3,3'-diaminodiphenyl sulfone (3,3'-DDS), 4,4'-diaminodiphenyl sulfone (4,4'-DDS), diaminodiphenylmethane (DDM), 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane (TEDDM), 3,3'-diisopropyl-5,5'-diethyl-4 ,4'-diaminodiphenylmethane, 3,3'-di-t-butyl-5,5'-diethyl-4,4'-diaminodiphenylmethane, 3,3',5,5'-tetraisopropyl-4,4'-diaminodiphenylmethane, 3,3'-di-t-butyl-5,5'-diisopropyl-4,4'-diaminodiphenylmethane, 3,3',5,5'-tetra-t-butyl-4,4'-diaminodiphenylmethane, diaminodiphenyl ether (DADPE), bisaniline, benzyldimethylaniline, 2-(dimethylaminomethyl)phenol (DMP-10), 2,4,6-tris(dimethylaminomethyl)phenol (DMP-30), 2-ethylhexanoate ester of 2,4,6-tris(dimethylaminomethyl)phenol, and the like can be used. Other examples include aniline novolak, orthoethylaniline novolak, aniline resins obtained by reacting aniline with xylylene chloride, and aniline resins obtained by polycondensation of aniline with substituted biphenyls (4,4'-bis(chloromethyl)-1,1'-biphenyl, 4,4'-bis(methoxymethyl)-1,1'-biphenyl, etc.) or substituted phenyls (1,4-bis(chloromethyl)benzene, 1,4-bis(methoxymethyl)benzene, 1,4-bis(hydroxymethyl)benzene, etc.).

Examples of the acid anhydride curing agent include phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, and methylhexahydrophthalic anhydride.

Examples of the amide-based curing agent include dicyandiamide, or a polyamide resin synthesized from a dimer of linoleic acid and ethylenediamine.

Examples of phenol-based curing agents include:
phenolic resins obtained by condensation of:
   polyhydric phenols (bisphenol A, bisphenol F, bisphenol S, fluorene bisphenol, terpene diphenol, 4,4'-dihydroxybiphenyl, 2,2'-dihydroxybiphenyl, 3,3',5,5'-tetramethyl-(1,1'-biphenyl)-4,4'-diol, hydroquinone, resorcin, naphthalene diol, tris-(4-hydroxyphenyl)methane, and 1,1,2,2-tetrakis(4-hydroxyphenyl)ethane, etc.); or
   phenols (e.g., phenol, alkyl-substituted phenol, naphthol, alkyl-substituted naphthol, dihydroxybenzene, and dihydroxynaphthalene, etc.), with
   aldehydes (formaldehyde, acetaldehyde, benzaldehyde, p-hydroxybenzaldehyde, o-hydroxybenzaldehyde, furfural, etc);
   ketones (p-hydroxyacetophenone, o-hydroxyacetophenone, etc.); or
   dienes (dicyclopentadiene, tricyclopentadiene, etc.),
phenolic resins obtained by condensation of the above-mentioned phenols with substituted biphenyls (4,4'-bis(chloromethyl)-1,1'-biphenyl and 4,4'-bis(methoxymethyl)-1,1'-biphenyl, etc.) or substituted phenyls (1,4-bis(chloromethyl)benzene, 1,4-bis(methoxymethyl)benzene, 1,4-bis(hydroxymethyl)benzene, etc.);
modified products of the above-mentioned phenols and/or the above-mentioned phenolic resins; and
halogenated phenols such as tetrabromobisphenol A and brominated phenolic resins.

In the curable resin composition of the present embodiment, it is also preferable to use the phenolic resin represented by the formula (2) as the entire amount of the curing agent or as a part thereof.

In the curable resin composition of the present embodiment, the amount of the curing agent used is preferably 0.7 to 1.2 equivalents relative to 1 equivalent of the epoxy group of the epoxy resin. If the amount is less than 0.7 equivalents relative to 1 equivalent of the epoxy group or if the amount exceeds 1.2 equivalents, curing may be incomplete and good cured physical properties may not be obtained.

In addition, in the curable resin composition of the present embodiment, a curing accelerator may be blended as necessary. The gelation time can also be adjusted by using a curing accelerator. Examples of curing accelerators that can be used include: imidazoles such as 2-methylimidazole, 2-ethylimidazole, and 2-ethyl-4-methylimidazole; tertiary amines such as 2-(dimethylaminomethyl)phenol and 1,8-diaza-bicyclo[5,4,0]undecene-7; phosphines such as triphenylphosphine; and metal compounds such as tin octylate. The curing accelerator is used in an amount of 0.01 to 5.0 parts by weight per 100 parts by weight of the epoxy resin as necessary.

In the curable resin composition of the present embodiment, other epoxy resins may be blended. Specific examples thereof include: polycondensation products of phenols (phenol, alkyl-substituted phenol, aromatic substituted phenol, naphthol, alkyl-substituted naphthol, dihydroxybenzene, alkyl-substituted dihydroxybenzene, dihydroxynaphthalene, etc.) and various aldehydes (formaldehyde, acetaldehyde, alkyl aldehyde, benzaldehyde, alkyl-substituted benzaldehyde, hydroxybenzaldehyde, naphthaldehyde, glutaraldehyde, phthalaldehyde, crotonaldehyde, cinnamaldehyde, etc.); polymers of phenols and various diene compounds (dicyclopentadiene, terpenes, vinylcyclohexene, norbornadiene, vinylnorbornene, tetrahydroindene, divinylbenzene, divinylbiphenyl, diisopropenylbiphenyl, butadiene, isoprene, etc.); polycondensation products of phenols and ketones (acetone, methyl ethyl ketone, methyl isobutyl ketone, acetophenone, benzophenone, etc.); phenolic resins obtained by polycondensation of phenols and substituted biphenyls (4,4'-bis(chloromethyl)-1,1'-biphenyl and 4,4'-bis(methoxymethyl)-1,1'-biphenyl, etc.) or substituted phenyls (1,4-bis(chloromethyl)benzene, 1,4-bis(methoxymethyl)benzene, 1,4-bis(hydroxymethyl)benzene, etc.); polycondensates of bisphenols and various aldehydes; glycidyl ether epoxy resins obtained by glycidylating alcohols; alicyclic epoxy resins such as 4-vinyl-1-cyclohexene diepoxide and 3,4-epoxycyclohexylmethyl-3,4'-epoxycyclohexanecarboxylate; glycidyl amine epoxy resins such as tetraglycidyldiaminodiphenylmethane (TGDDM) and triglycidyl-p-aminophenol; glycidyl ester epoxy resins, etc., but are not limited to these, so long as they are commonly used epoxy resins.

The curable resin composition of the present embodiment can be mixed with known additives as necessary. Specific examples of additives that can be used include polybutadiene and its modified products, modified products of acrylonitrile copolymers, polyphenylene ether, polystyrene, polyethylene, polyimide, fluororesin, maleimide-based compounds, cyanate ester-based compounds, silicone gel, silicone oil; inorganic fillers such as silica, alumina, calcium carbonate, quartz powder, aluminum powder, graphite, talc, clay, iron oxide, titanium oxide, aluminum nitride, asbestos, mica, and glass powder; surface treatment agents for fillers such as silane coupling agents; release agents; and colorants such as carbon black, phthalocyanine blue, and phthalocyanine green.

The curable resin composition of the present embodiment may contain a known maleimide compound as necessary. Specific examples of the maleimide compound that may be used include 4,4'-diphenylmethane bismaleimide, polyphenylmethane maleimide, m-phenylene bismaleimide, 2,2'-bis[4-(4-maleimidophenoxy)phenyl]propane, 3,3'-dimethyl-5,5'-diethyl-4,4'-diphenylmethane bismaleimide, 4-methyl-1,3-phenylene bismaleimide, 4,4'-diphenylether bismaleimide, 4,4'-diphenylsulfone bismaleimide, 1,3-bis(3-maleimidophenoxy)benzene, 1,3-bis(4-maleimidophenoxy)benzene, and biphenylaralkyl maleimide, but are not limited thereto. These may be used alone or in combination of two or more. When the maleimide compound is blended, a curing accelerator is blended if necessary. The above-mentioned curing accelerators, as well as radical polymerization initiators such as organic peroxides and azo compounds can be used.

The curable resin composition of the present embodiment can be made into a varnish-like composition (hereinafter, simply referred to as varnish) by adding an organic solvent. Examples of the solvent to be used include: amide-based solvents such as γ-butyrolactones, N-methylpyrrolidone, N,N-dimethylformamide, N,N-dimethylacetamide, and N,N-dimethylimidazolidinone; sulfones such as tetramethylene sulfone; ether-based solvents such as diethylene glycol dimethyl ether, diethylene glycol diethyl ether, propylene glycol, propylene glycol monomethyl ether, propylene glycol monomethyl ether monoacetate, and propylene glycol monobutyl ether; ketone-based solvents such as methyl ethyl ketone, methyl isobutyl ketone, cyclopentanone, and cyclohexanone; and aromatic solvents such as toluene and xylene. The solvent is used in such a range that the solids concentration excluding the solvent in the obtained varnish is preferably 10 to 80% by weight, more preferably 20 to 70% by weight.

The curable resin composition of the present embodiment can also be used as a resin sheet, a prepreg, or a carbon fiber-reinforced composite material.

The curable resin composition of the present embodiment may be applied to one or both sides of a support substrate and used as a resin sheet. Examples of application methods include a casting method, a method of extruding a resin from a nozzle or a die using a pump or an extruder, and adjusting the thickness with a blade, a method of calendering with a roll to adjust the thickness, and a method of spraying using a spray or the like. In addition, in the step of forming a layer, the curable resin composition may be heated in a temperature range that can avoid thermal decomposition. In addition, rolling treatment, grinding treatment, etc. may be performed as necessary. Examples of support substrates include, but are not limited to, appropriate thin sheets such as: porous substrates made of paper, cloth, nonwoven fabric, etc.; plastic films or sheets such as polyethylene, polypropylene, polyethylene terephthalate, and polyester films; nets, foams, metal foils, and laminates thereof. The thickness of the support substrate is not particularly limited and is appropriately determined depending on the application.

The curable resin composition and/or resin sheet of the present embodiment can be heated and melted to reduce the viscosity, and then impregnated into a fiber base material to obtain the prepreg of the present embodiment.

The prepreg of the present embodiment can also be obtained by impregnating a fiber substrate with the varnish-like curable resin composition and drying it by heating. The prepreg is cut into a desired shape, laminated, and then the laminate is heated and cured while applying pressure by press molding, autoclave molding, sheet winding molding, or the like, to obtain the carbon fiber-reinforced composite material of the present embodiment. Copper foil or an organic film can also be laminated when laminating the prepreg.

Furthermore, the carbon fiber-reinforced composite material of the present embodiment can be obtained by molding using a known method other than the above-mentioned method. For example, a resin transfer molding technique (RTM method) can be used in which a carbon fiber substrate (usually a carbon fiber fabric) is cut, laminated, and shaped to produce a preform (a preform before being impregnated with resin), the preform is placed in a mold, the mold is closed, resin is injected to impregnate the preform, the resin is hardened, and the mold is opened to remove the molded product.

Also usable are a type of RTM method, such as the VaRTM method, the Seeman's Composite Resin Infusion Molding Process (SCRIMP) method, and the Controlled Atmospheric Pressure Resin Infusion (CAPRI) method, which is described in JP-A-2005-527410, in which a resin supply tank is evacuated to a pressure lower than atmospheric pressure, circulation compression is used, and the net molding pressure is controlled to more appropriately control the resin injection process, particularly the VaRTM method.

Further, a film stacking method in which a fiber substrate is sandwiched between resin sheets (films), a method in which a powdered resin is attached to a reinforcing fiber substrate to improve impregnation, a molding method (Powder Impregnated Yarn) in which a fluidized bed or fluid slurry method is used in the process of mixing the resin into the fiber substrate, and a method in which resin fibers are mixed into the fiber substrate can also be used.

Examples of carbon fibers include acrylic, pitch, and rayon carbon fibers, and among them, acrylic carbon fibers having high tensile strength are preferably used. As the form of carbon fibers, twisted yarn, untwisted yarn, non-twisted yarn, etc. can be used, but untwisted yarn or non-twisted yarn is preferably used because it has a good balance between the formability and strength properties of the fiber-reinforced composite material.

### Examples

The present invention will be described in more detail below with reference to synthesis examples and examples. The materials, processing contents, processing steps, etc. shown below can be appropriately changed without departing from the spirit of the present invention. Therefore, the scope of the present invention should not be interpreted as being limited by the specific examples shown below.

The analysis was performed under the following conditions.

### Epoxy equivalent:

Epoxy equivalet was measured according to the method described in JIS K7236. The unit is g/eq.

### GPC (gel permeation chromatography) analysis

Manufacturer: Waters
Column: Guard column SHODEX GPC KF-601, KF-602 KF-602.5, KF-603
Flow rate: 0.5 ml/min
Column temperature: 40°C
Solvent used: THF (tetrahydrofuran)
Detector: RI (differential refractometer)

### [Synthesis Example 1]

254 parts by weight of phenol, 63 parts by weight of water, and 27 parts by weight of sodium hydroxide were charged into a flask equipped with a stirrer, a reflux condenser, and a heating device, and after stirring and dissolving, the mixture was heated to 110°C, and 63 parts by weight of furfural was dropped over 2 hours. After that, the mixture was reacted at 110°C for 3 hours, and then heated to 145°C. During the temperature increase, the water distilled out was removed from the system. Immediately after reaching 145°C, the mixture was cooled to 80°C, and 63 parts by weight of water was charged, and 4 parts by weight of phosphoric acid and 63 parts by weight of 35% hydrochloric acid were added to neutralize. After repeated washing with water, unreacted phenol was distilled off under reduced pressure with heating to obtain 112 parts by weight of the phenolic resin represented by the above formula (2). 78 parts by weight of the obtained phenolic resin represented by the formula (2) were charged into a reaction vessel with 254 parts by weight of epichlorohydrin (ECH, hereinafter the same), 64 parts by weight of dimethyl sulfoxide (DMSO, hereinafter the same), and 13 parts by weight of water, and the mixture was heated and stirred. After dissolving the phenolic resin and ECH, 23 parts by weight of flaky sodium hydroxide were charged in portions over 2 hours while maintaining the temperature of the solution at 45°C. Thereafter, the reaction was further carried out at 45°C for 2 hours and at 70°C for 60 minutes. Then, the mixture was repeatedly washed with water to remove by-product salts and dimethyl sulfoxide, and then excess epichlorohydrin was distilled off from the oil layer under heating and reduced pressure, and 218 parts by weight of methyl isobutyl ketone was added to resolve the residue. This methyl isobutyl ketone solution was heated to 70°C, 7 parts by weight of 30% aqueous sodium hydroxide solution was added, and the mixture was reacted for 1 hour, after which the reaction solution was repeatedly washed with water until the washing liquid became neutral. Then, methyl isobutyl ketone was distilled off from the oil layer under heating and reduced pressure to obtain 101 parts by weight of the epoxy resin represented by the above formula (1) (n in formula (1) is 2.2). The epoxy equivalent of the obtained epoxy resin was 218 g/eq.

### [Synthesis Example 2]

254 parts by weight of phenol, 63 parts by weight of water, and 27 parts by weight of sodium hydroxide were charged into a flask equipped with a stirrer, a reflux condenser, and a heating device, and after stirring and dissolving, the mixture was heated to 110°C, and 53 parts by weight of furfural was dropped over 2 hours. After that, the mixture was reacted at 110°C for 3 hours, and then heated to 145°C. During the temperature increase, the water distilled out was removed from the system. After reaching 145°C, the mixture was reacted for 4 hours. Then, the mixture was cooled to 80°C, 63 parts by weight of water was charged, and 4 parts by weight of phosphoric acid and 63 parts by weight of 35% hydrochloric acid were added to neutralize the mixture. After repeated washing with water, unreacted phenol was distilled off under heating and reduced pressure to obtain 109 parts by weight of the phenolic resin represented by the formula (2). 254 parts by weight of ECH, 64 parts by weight of DMSO, and 13 parts by weight of water were charged into a reaction vessel relative to 78 parts by weight of the obtained phenolic resin represented by the formula (2), and the mixture was heated and stirred. After dissolving the phenolic resin and ECH, 23 parts by weight of flaky sodium hydroxide was charged in portions over 2 hours while maintaining the temperature at 45°C. The reaction was then continued for 2 hours at 45°C and for 60 minutes at 70°C. After repeated washing with water to remove by-product salts and dimethyl sulfoxide, excess epichlorohydrin was distilled off from the oil layer under heating and reduced pressure, and 218 parts by weight of methyl isobutyl ketone was added to dissolve the residue. This methyl isobutyl ketone solution was heated to 70°C, 7 parts by weight of 30% aqueous sodium hydroxide solution was added, and the reaction was continued for 1 hour. The reaction solution was repeatedly washed with water until the washing liquid became neutral. Then, 103 parts by weight of the epoxy resin represented by the formula (1) was obtained by distilling off methyl isobutyl ketone from the oil layer under heating and reduced pressure (n in formula (1) is 2.1). The epoxy equivalent of the obtained epoxy resin was 213 g/eq.

### [Synthesis Example 3]

254 parts by weight of phenol, 63 parts by weight of water, and 27 parts by weight of sodium hydroxide were charged into a flask equipped with a stirrer, a reflux condenser, and a heating device, and after stirring and dissolving, the mixture was heated to 110°C, and 44 parts by weight of furfural was dropped over 2 hours. After that, the mixture was reacted at 110°C for 3 hours, and then heated to 145°C. During the temperature increase, the water distilled out was removed from the system. Immediately after reaching 145°C, the mixture was cooled to 80°C, 63 parts by weight of water was charged, and 4 parts by weight of phosphoric acid and 63 parts by weight of 35% hydrochloric acid were added to neutralize the mixture. After repeated washing with water, unreacted phenol was distilled off under heating and reduced pressure to obtain 109 parts by weight of the phenolic resin represented by the formula (2). 254 parts by weight of ECH, 64 parts by weight of DMSO, and 13 parts by weight of water were charged into a reaction vessel relative to 78 parts by weight of the obtained phenolic resin represented by the formula (2), and the mixture was heated and stirred. After dissolving the phenolic resin and ECH, 23 parts by weight of flaky sodium hydroxide was charged in portions over 2 hours while maintaining the temperature at 45°C. Then, the reaction was further carried out at 45°C for 2 hours and at 70°C for 60 minutes. Then, washing with water was repeated to remove by-product salts and dimethyl sulfoxide, and then excess epichlorohydrin was distilled off from the oil layer under heating and reduced pressure, and 218 parts by weight of methyl isobutyl ketone was added to the residue and dissolved. This methyl isobutyl ketone solution was heated to 70°C, 7 parts by weight of 30% aqueous sodium hydroxide solution was added, and the reaction was carried out for 1 hour. The reaction solution was repeatedly washed with water until the washing liquid became neutral. Then, 103 parts by weight of the epoxy resin represented by the formula (1) was obtained by distilling off methyl isobutyl ketone from the oil layer under heating and reduced pressure (n in formula (1) is 2.0). The epoxy equivalent of the obtained epoxy resin was 211 g/eq.

### [Synthesis Example 4]

254 parts by weight of phenol, 63 parts by weight of water, and 27 parts by weight of sodium hydroxide were charged into a flask equipped with a stirrer, a reflux condenser, and a heating device, and after stirring and dissolving, the mixture was heated to 110°C, and 90 parts by weight of furfural was dropped over 2 hours. After that, the mixture was reacted at 110°C for 3 hours, and then heated to 145°C. During the temperature increase, the water distilled out was removed from the system. After reaching 145°C, the mixture was reacted for 4 hours. Then, the mixture was cooled to 80°C, and 63 parts by weight of water was charged, and 4 parts by weight of phosphoric acid and 63 parts by weight of 35% hydrochloric acid were added to neutralize the mixture. After repeated washing with water, unreacted phenol was distilled off under heating and reduced pressure to obtain 120 parts by weight of the phenolic resin represented by the formula (2). 254 parts by weight of ECH, 64 parts by weight of DMSO, and 13 parts by weight of water were charged into a reaction vessel relative to 78 parts by weight of the obtained phenolic resin represented by the formula (2), and the mixture was heated and stirred. After dissolving the phenolic resin and ECH, 23 parts by weight of flaky sodium hydroxide was charged in portions over 2 hours while maintaining the temperature at 45°C. The reaction was then continued for 2 hours at 45°C and for 60 minutes at 70°C. After repeated washing with water to remove by-product salts and dimethyl sulfoxide, excess epichlorohydrin was distilled off from the oil layer under heating and reduced pressure, and 218 parts by weight of methyl isobutyl ketone was added to dissolve the residue. This methyl isobutyl ketone solution was heated to 70°C, 7 parts by weight of 30% aqueous sodium hydroxide solution was added, and the reaction was continued for 1 hour. The reaction solution was repeatedly washed with water until the washing liquid became neutral. Then, 90 parts by weight of the epoxy resin represented by the formula (1) was obtained by distilling off methyl isobutyl ketone from the oil layer under heating and reduced pressure (n in formula (1) is 2.6). The epoxy equivalent of the obtained epoxy resin was 223 g/eq.

### [Synthesis Example 5]

254 parts by weight of phenol, 63 parts by weight of water, and 27 parts by weight of sodium hydroxide were charged into a flask equipped with a stirrer, a reflux condenser, and a heating device, and after stirring and dissolving, the mixture was heated to 110°C, and 33 parts by weight of furfural was dropped over 2 hours. After that, the mixture was reacted at 110°C for 3 hours, and then heated to 145°C. During the temperature increase, the water distilled out was removed from the system. Immediately after reaching 145°C, the mixture was cooled to 80°C, 63 parts by weight of water was charged, and 4 parts by weight of phosphoric acid and 63 parts by weight of 35% hydrochloric acid were added to neutralize the mixture. After repeated washing with water, unreacted phenol was distilled off under heating and reduced pressure to obtain 90 parts by weight of the phenolic resin represented by the formula (2). 254 parts by weight of ECH, 64 parts by weight of DMSO, and 13 parts by weight of water were charged into a reaction vessel relative to 78 parts by weight of the obtained phenolic resin represented by the formula (2), and the mixture was heated and stirred. After dissolving the phenolic resin and ECH, 23 parts by weight of flaky sodium hydroxide was charged in portions over 2 hours while maintaining the temperature at 45°C. The reaction was then continued for 2 hours at 45°C and for 60 minutes at 70°C. After repeated washing with water to remove by-product salts and dimethyl sulfoxide, excess epichlorohydrin was distilled off from the oil layer under heating and reduced pressure, and 218 parts by weight of methyl isobutyl ketone was added to the residue to dissolve it. This methyl isobutyl ketone solution was heated to 70°C, 7 parts by weight of 30% aqueous sodium hydroxide solution was added, and the reaction was continued for 1 hour. The reaction solution was repeatedly washed with water until the washing liquid became neutral. Then, 109 parts by weight of the epoxy resin represented by the formula (1) was obtained by distilling off methyl isobutyl ketone from the oil layer under heating and reduced pressure (n in formula (1) is 1.7). The epoxy equivalent of the obtained epoxy resin was 204 g/eq.

### [Examples 1 to 3, Comparative Examples 1 to 2]

The epoxy resins obtained in Synthesis Examples 1 to 5 were used as the base resin, and 3,3',5,5'-tetraethyl-4,4'-diaminodiphenylmethane (abbreviation: TEDDM, manufactured by Tokyo Chemical Industry Co., Ltd., active hydrogen equivalent 78 g/eq.) was used as the curing agent. These were mixed in the weight ratios shown in the formulations in Table 1, and cured at 160°C for 6 hours to produce cured products.

The physical properties were measured under the following conditions.

### <Conditions for measuring glass transition point (Tg)>

Dynamic viscoelasticity measuring device: TA-instruments, DMA-2980
Measurement temperature range: -30 to 280°C
Heating rate: 2°C/min
Tg: The peak temperature of the loss modulus was taken as Tg.

### <Conditions for measuring flexural strength and maximum flexural strain>

Measurements were made according to JIS K-7074.

**[Table 1]**

| | | Epoxy Equivalent (g/eq. ) | Example 1 | Example 2 | Example 3 | Comparative Example 1 | Comparative Example 2 |
|---|---|---|---|---|---|---|---|
| Base Resin | Epoxy resin obtained in Synthesis Example 1 | 218 | 73. 6 | | | | |
| | Epoxy resin obtained in Synthesis Example 2 | 213 | | 73. 2 | | | |
| | Epoxy resin obtained in Synthesis Example 3 | 211 | | | 73 | | |
| | Epoxy resin obtained in Synthesis Example 4 | 223 | | | | 74. 1 | |
| | Epoxy resin obtained in Synthesis Example 5 | 204 | | | | | 72. 3 |
| Curing Agent | TEDDM | | 26. 4 | 26. 8 | 27 | 25. 9 | 27. 7 |
| Physical Properties of Cured Product | Glass Transition Temperature [°C] | | 192 | 189 | 190 | 199 | 178 |
| | Flexural Strength [MPa] | | 110 | 117 | 116 | 87 | 119 |
| | Maximum Flexural Strain [%] | | 5.3 | 6.5 | 6.4 | 3.6 | 7. 5 |

From the results in Table 1, it was confirmed that the cured products of Examples 1 to 3 of the present application had high glass transition temperatures and excellent heat resistance as well as excellent flexural strength. On the other hand, it was confirmed that Comparative Example 1 had problems with flexural strength and maximum flexural strain, and Comparative Example 2 had problems with heat resistance.

This application claims priority based on Japanese Patent Application No. 2023-113998, filed on July 11, 2023.

## Claims

1. An epoxy resin represented by the following formula (1) and having an epoxy equivalent of 210 g/eq. or more and 218 g/eq. or less: 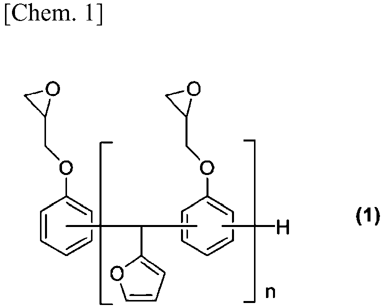 In formula (1), n is the average number of repetitions and is a real number in the range of 1<n<15.

2. A curable resin composition comprising the epoxy resin according to claim 1 and a curing agent.

3. The curable resin composition according to claim 2, wherein the curing agent is an amine-based curing agent.

4. A cured product obtained by curing the curable resin composition according to claim 2 or 3.

5. A carbon fiber-reinforced composite material comprising a cured product obtained by curing the curable resin composition according to claim 2 or 3, and carbon fibers.
